# EUROPÄISCHE PATENTSCHRIFT

(11) **EP 2 950 567 B1**
(45) Veröffentlichungstag und Bekanntmachung des Hinweises auf die Patenterteilung: **15.11.2017**
(21) Anmeldenummer: 14170527.7
(22) Anmeldetag: 30.05.2014
(51) Int. Cl.: H04W 8/18, H04W 4/20, H04W 4/08, H04W 84/12

(54) **Verfahren zum Sammeln von Teilnehmerdaten in einem ersten Kommunikationsnetz und Übertragen der gesammelten Teilnehmerdaten an ein zweites Kommunikationsnetz zur Zuweisung von Diensten des zweiten Kommunikationsnetzes**
Method for collecting subscriber data in a first communication network and transmitting the collected subscriber data to a second communication network for allocating services of the second communication network
Procédé pour collecter des données d'abonné dans un premier réseau de communication et pour transmettre les données d'abonné collectées à un deuxième réseau de communication pour attribuer des services du deuxième réseau de communication

(43) Veröffentlichungstag der Anmeldung: 02.12.2015
(73) Patentinhaber: Deutsche Telekom AG, 53113 Bonn (DE)
(72) Erfinder: Stepanek, Nicolas, 64385 Reichelsheim (DE); Bussmann, Lucas, 53113 Bonn (DE); Spanknebel, Frank R., 64521 Groß-Gerau (DE)
(74) Vertreter: Patentship Patentanwaltsgesellschaft mbH

(56) Entgegenhaltungen:
- US-A1- 2007 282 621
- US-A1- 2010 280 904
- US-A1- 2011 035 445

## Beschreibung

Die vorliegende Erfindung betrifft ein Verfahren zum Bereitstellen von Teilnehmerdaten einer Anzahl von mobilen Teilnehmerkommunikationsgeräten eines ersten Kommunikationsnetzes in einem zweiten Kommunikationsnetz und ein zugehöriges Kommunikationssystem.

In heutigen Telefonie- und Mobilfunknetzen erfolgt die Zuweisung von Diensten basierend auf einer Identifikation der Teilnehmergeräte im Netz, wobei die Dienste bei Vertragsabschluss mit den Teilnehmergeräten verknüpft werden. Dem Netzbetreiber eines Telefonie- oder Mobilfunknetzes ist es so anhand der Identifikation der Teilnehmergeräte möglich, den eigenen Teilnehmern bei Nutzung seines Netzes einen günstigeren Tarif anzubieten als fremden Teilnehmern oder für die eigenen Teilnehmer zusätzliche Leistungen bereitzustellen. Beispielsweise kann eine gewisse Anzahl von SIM Karten für Familienmitglieder oder Freunde für vergünstigtes Telefonieren untereinander im Mobilfunknetz des Netzbetreibers registriert werden. Die Nutzung von Diensten im Telefonie- bzw. Mobilfunknetz ist somit abhängig von der Zuweisung oder der Registrierung durch den Netzbetreiber. Bei Änderungen an der Identifikation des Teilnehmers, beispielsweise durch Kauf eines zusätzlichen Mobilfunkgeräts für ein weiteres Familienmitglied oder Freund und/oder Einlegen einer neuen SIM Karte in das Mobiltelefon ist stets eine Änderung des Eintrags für die Zuweisung von Diensten durch den Netzbetreiber erforderlich, beispielsweise durch eine schriftliche Beantragung oder einen Anruf beim Netzbetreiber. Dies ist aber ein sehr umständlicher Vorgang, der zumindest einige Stunden, wenn nicht sogar Tage in Anspruch nimmt.

Die Druckschrift US 2010/0280904 A1 betrifft ein Gerät für soziales Marketing und Beziehungspflege, das es möglich macht, unabhängig von einem physikalischen Aufenthaltsort empfangene Nachrichten mit Nutzern innerhalb einer auswählbaren Umgebung abzugleichen.

Die Druckschrift US 2011/0035445 A1 betrifft ein System zur sozialen Beziehungspflege, das persönliche Interaktionen erleichtert.

Die Druckschrift US 2007/0282621 A1 betrifft ein mobiles Kontaktvermittlungssystem, das lokale Nutzerinformationen auswertet.

Es ist die Aufgabe der vorliegenden Erfindung, die Zuweisung von Diensten an mobile Teilnehmergeräte flexibler und schneller zu gestalten.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren zum Übermitteln von Teilnehmerdaten und Kommunikationssysteme können in mobilen Teilnehmerkommunikationsgeräten, beispielsweise Smartphones, Tablets, Mobiltelefonen, Laptops und Notebooks mit Mobilfunkadapter eingesetzt werden, insbesondere in solche, die mit Smart-Karten, Chipkarten, SIM Karten und/oder Multi SIM Karten ausgestattet sind, welche in mobilen Kommunikationsgeräten, beispielsweise GSM, UMTS und LTE Kommunikationsnetzen eingesetzt werden.

Die im Folgenden vorgestellten Verfahren zum Übermitteln von Teilnehmerdaten und Kommunikationssysteme können in lokalen Kommunikationsnetzen, beispielsweise WLAN, WiFi, und Heimnetzwerken eingesetzt werden. Die Teilnehmerdaten können an regionale oder globale Kommunikationsnetze übertragen werden, beispielsweise GSM, UMTS, LTE Mobilfunknetze.

Die im Folgenden vorgestellten mobilen Teilnehmerkommunikationsgeräte können Signale von einem Kommunikationsnetzwerk empfangen und/oder Signale in das Kommunikationsnetzwerk senden. Ein mobiles Teilnehmerkommunikationsgerät kann Hardware und/oder Software umfassen, um die technischen Funktionen des mobilen Teilnehmerkommunikationsgeräts zu realisieren. Das mobile Teilnehmerkommunikationsgerät kann Mikroprozessoren, Mikrochips, ASICs und/oder DSPs umfassen.

Um die Erfindung im Detail zu beschreiben, werden die folgenden Abkürzungen und Bezeichnungen verwendet:
- SIM:: Subscriber Identification Module, Teilnehmeridentitätsmodul, Die SIM-Karte ist eine Chipkarte, die in ein Mobiltelefon eingesteckt wird und zur Identifikation des Nutzers im Netz dient.
- MultiSIM:: Bei Multi-SIM werden mehrere SIM-Karten mit verschiedenen Telefonnummern (auch von unterschiedlichen Providern) in einem Gerät verwendet.
- MSISDN:: Mobile Subscriber Integrated Services Digital Number, Mobilfunkrufnummer.
- UICC:: Universal Integrated Circuit Card, Chipkarte bzw. Smart-Karte.
- IMEI:: International Mobile Equipment Identity, Geräteidentifikation, Hardwareidentifikation.
- IMSI:: International Mobile Subscriber Identity, dient der eindeutigen Identifizierung von Netzteilnehmern (interne Teilnehmerkennung). Neben weiteren Daten wird die IMSI auf einer speziellen Chipkarte, dem so genannten SIM (Subscriber Identity Module), gespeichert.
- MNO:: Mobile Network Operator, Mobilfunknetzbetreiber.
- App:: Software Applikation, Anwendungssoftware, ein Programm, das üblicherweise auf einem Smartphone läuft, ausgeführt durch einen Mikroprozessor des Smartphones unter Nutzung des Betriebssystems, z.B. Android.
- App Enabler:: Freischalter für eine Software Applikation.
- WiFi Netz:: ein Netz, das nach Vorgaben der WiFi Allianz auf der Basis des IEEE-802.11-Standards zertifiziert ist und so den Betrieb mit verschiedenen Wireless-Geräten, die diesen Standard erfüllen, gewährleistet.
- WLAN:: Wireless Local Area Network, bezeichnet ein lokales Funknetz, wobei meistens ein Standard der IEEE-802.11-Familie gemeint ist. Für diese engere Bedeutung wird in manchen Ländern auch synonym der Begriff WiFi verwendet.
- virtueller Raum:: bezeichnet einen Speicherplatz in einem Kommunikationsnetz, insbesondere zum Speichern von Teilnehmerdaten, der nicht auf einem festen Speicher im Netz lokalisiert ist, sondern der anwenderbasiert ausgewählt werden kann.
- Virtuelle Gruppe:: bezeichnet einen Satz von Teilnehmerdaten, der aus einer Gruppe von mobilen Teilnehmerkommunikationsgeräten aus einem ersten Kommunikationsnetz, beispielsweise einem lokalen Netz, gewonnen wurde, aber keine festen Adressen oder Telefonnummern umfasst sondern anwenderbasiert veränderbar ist.

Gemäß einem ersten Aspekt betrifft die Erfindung ein Verfahren zum Bereitstellen von Teilnehmerdaten einer Anzahl von mobilen Teilnehmerkommunikationsgeräten eines ersten Kommunikationsnetzes in einem zweiten Kommunikationsnetz gemäß den Merkmalen des unabhängigen Anspruchs 1.

Ein solches Verfahren hat den Vorteil, dass es das Zuweisen von Diensten an mobile Teilnehmergeräte flexibel und schnell ermöglicht, denn durch das Sammeln der Teilnehmerdaten von allen mobilen Geräten, die im ersten Netz angemeldet sind, ist es möglich, schnell und flexibel eine Gruppe zusammenzufassen und ihre Daten zusammen als ein Teilnehmerdatensatz abzulegen. An alle Geräte, die dieser Gruppe angehören können nun schnell Dienste eines zweiten Netzes zugewiesen werden, wenn der Teilnehmerdatensatz durch das Übertragen an das zweite Netz im zweiten Netz bekannt gemacht wird. Beim Austausch einer SIM-Karte braucht der Vorgang nur wiederholt werden, um den Teilnehmerdatensatz zu aktualisieren. Es ist nicht mehr nötig, beim MNO bzw. Serviceprovider anzurufen, um für ein bestimmtes Gerät einen Dienst freischalten zu lassen. Stattdessen kann die Dienstzuweisung einheitlich erfolgen für alle Geräte, die der Gruppe derjenigen Geräte angehören, die im ersten Kommunikationsnetz angemeldet sind, beispielsweise Mobiltelefone der Familie, die im Heimnetzwerk lokalisiert sind oder alle mobilen Teilnehmerkommunikationsgeräte eines Firmennetzwerks.
Gemäß einer Ausführungsform des Verfahrens gemäß dem ersten Aspekt übertragen nur diejenigen mobilen Teilnehmerkommunikationsgeräte Teilnehmerdaten ansprechend auf die Datenanfrage, welche zur Übertragung von Teilnehmerdaten berechtigt sind.
Dies bietet den Vorteil, dass nur solche Geräte ihre Daten übertragen, für die eine solche Erstellung eines Teilnehmerdatensatzes gewünscht ist, beispielsweise nur mobile Kommunikationsgeräte, denen eine spezielle Berechtigung zugewiesen ist.
Gemäß einer Ausführungsform des Verfahrens gemäß dem ersten Aspekt wird auf dem ersten mobilen Teilnehmerkommunikationsgerät eine Applikationssoftware ausgeführt, welche das Übertragen der Datenabfrage initiiert; und sind diejenigen mobilen Teilnehmerkommunikationsgeräte zur Übertragung von Teilnehmerdaten berechtigt, auf welchen die Applikationssoftware ausgeführt wird oder auf welchen eine Freigabesoftware zur Freigabe der Übertragung von Teilnehmerdaten ausgeführt wird.

Dies bietet den Vorteil, dass nur solche Geräte ihre Daten übertragen, für die eine solche Erstellung eines Teilnehmerdatensatzes gewünscht ist, beispielsweise nur mobile Kommunikationsgeräte, auf denen eine zugehörige Applikationssoftware, auch als App bezeichnet, installiert ist. Im lokalen Netzwerk können sich eine Vielzahl von Geräten befinden, die sich beispielsweise nur innerhalb des lokalen Netzwerks aufhalten sollen, z.B. Drucker, Aktoren, wie z.B. ferngesteuerte Türschließanlagen oder Server. Diese Geräte sollen keine Berechtigung erhalten, in die Liste der Teilnehmernummern mit aufgenommen zu werden. Lediglich Mobiltelefone, Tablets oder andere mobile Geräte mit Funkadapter können dazu ausersehen sein, sowohl im ersten als auch im zweiten Kommunikationsnetz kommunizieren zu dürfen. Auf diesen kann die gewünschte App installiert werden, um das Anlegen eines Teilnehmerdatensatzes mit ihren Daten zu ermöglichen.

Gemäß einer Ausführungsform des Verfahrens gemäß dem ersten Aspekt erfolgen das Übertragen der Datenanfrage und/oder das Übertragen der Teilnehmerdaten basierend auf einer physischen Annäherung des ersten mobilen Teilnehmerkommunikationsgeräts zu der Anzahl der mobilen Teilnehmerkommunikationsgeräte.

Dies bietet den Vorteil, dass nur solche mobilen Teilnehmerkommunikationsgeräte für das Erstellen eines Teilnehmerdatensatzes verwendet werden, die sich innerhalb eines abgegrenzten Bereiches, beispielsweise ein Heimnetzwerk oder ein Unternehmensnetz befinden.

Gemäß einer Ausführungsform umfasst das Verfahren gemäß dem ersten Aspekt ferner ein Übermitteln von Adressen der Anzahl der mobilen Teilnehmerkommunikationsgeräte von einem Server des ersten Kommunikationsnetzes an das erste Teilnehmerkommunikationsgerät, wobei der Server einen WIFI Server, einen WLAN Server oder einen Heimnetzserver umfasst.

Dies bietet den Vorteil, dass das erste Teilnehmerkommunikationsgerät sich lediglich an einen Server, beispielsweise einen WiFi, WLAN oder Heimnetz-Server wenden muss, um auf einfache Weise die Adressen aller im Netz registrierten Teilnehmergeräte zu erhalten.

Gemäß einer Ausführungsform des Verfahrens gemäß dem ersten Aspekt sind die mobilen Teilnehmerkommunikationsgeräte mit zumindest einer SIM Karte und/oder zumindest einer Multi SIM Karte ausgestattet.

Dies bietet den Vorteil, dass das Verfahren die Identifikationen der mobilen Teilnehmerkommunikationsgeräte, beispielsweise ihre MSISDN Nummern, beim Wechsel der SIM Karte oder der Multi SIM Karte schnell und flexibel aktualisieren kann und somit kein zusätzlicher Anruf beim Kundenservicecenter erforderlich ist.

Gemäß einer Ausführungsform des Verfahrens gemäß dem ersten Aspekt umfasst das Übertragen der Datenanfrage eine Anfrage nach zumindest einer MSISDN Nummer der Anzahl der mobilen Teilnehmerkommunikationsgeräte.

Dies bietet den Vorteil, dass anhand der MSISDN Nummer jeder mobile Teilnehmeranschluss leicht zu identifizieren ist und nicht von dem verwendeten Gerät abhängt. D.h. beim Austausch der SIM Karte und Verwendung in einem anderen Gerät, z.B. bei Anschaffung eines neuen Smartphones, bleiben die Teilnehmerdaten erhalten, da sie an die MSISDN Nummer geknüpft sind und nicht an das verwendete Mobiltelefon.

Gemäß einer Ausführungsform des Verfahrens gemäß dem ersten Aspekt umfasst das Übermitteln der Teilnehmerdaten eine Übermittlung einer Liste von MSISDN Nummern der zumindest einen Teilnehmerkommunikationsgeräte.

Dies hat den Vorteil, dass in der Liste effektiv alle mobilen Geräte der Gruppe zusammengefasst werden können und eine übersichtliche Zuordnung bilden.

Gemäß einer Ausführungsform umfasst das Verfahren gemäß dem ersten Aspekt ein Anzeigen der Teilnehmerdaten zusammen mit einer zugehörigen Identifikation, insbesondere einer MSISDN Nummer, der zumindest einen mobilen Teilnehmerkommunikationsgeräte.

Dies hat den Vorteil, dass der Nutzer leicht auf seinem Display überprüfen kann, ob alle gewünschten Mobiltelefone auch zu der erstellten Teilnehmergruppe zugeordnet wurden. Außerdem kann er notwendige Änderungen veranlassen und/oder weitere persönliche Daten hinzufügen.

Gemäß einer Ausführungsform umfasst das Verfahren gemäß dem ersten Aspekt ein Speichern der Teilnehmerdaten in einem Speicher zumindest einer der folgenden Entitäten: dem ersten mobilen Teilnehmerkommunikationsgerät, einem Server des ersten Kommunikationsnetzes, insbesondere einem WIFI Server, einem WLAN Server oder einem Heimnetzwerkserver, einem Server, insbesondere einem Autobuddy Server, des zweiten Kommunikationsnetzes.

Dies hat den Vorteil, dass durch das Speichern die Teilnehmerdaten langfristig verfügbar sind und so auch an andere Netze übertragen werden können. Beim Speichern der Teilnehmerdaten im ersten mobilen Teilnehmerkommunikationsgerät oder im Server des lokalen Netzwerks ist der Zugriff von außen beschränkt, was aus Datenschutzgründen vorteilhaft sein kann. Der Nutzer kann bei jedem Zugriff auf die Teilnehmerdaten entscheiden, ob er den Zugriff erlauben möchte oder nicht. Beim Speichern auf dem Autobuddy Server können die Teilnehmerdaten langfristig in anderen Netzen genutzt werden und die Teilnehmergruppe ist in einer Vielzahl von Netzen bekannt, so dass die an die Teilnehmerdaten gebundenen zusätzlichen Dienste flexibel genutzt werden können.

Gemäß einer Ausführungsform umfasst das Verfahren gemäß dem ersten Aspekt ein Speichern der Teilnehmerdaten basierend auf einer Identifikation des ersten mobilen Teilnehmerkommunikationsgeräts, insbesondere einer MSISDN Nummer.

Dies hat den Vorteil, dass die Daten leicht wiederaufgefunden werden können.

Gemäß einer Ausführungsform umfasst das Verfahren gemäß dem ersten Aspekt ein Speichern der Teilnehmerdaten basierend auf einer anwenderbasierten Auswahl zumindest eines virtuellen Raumes und/oder zumindest einer virtuellen Gruppe.

Dies hat den Vorteil, dass der Nutzer selbst eine virtuelle Gruppe oder einen virtuellen Raum erstellen kann, in dem seine Teilnehmerdaten gespeichert werden sollen.
Gemäß einer Ausführungsform des Verfahrens gemäß dem ersten Aspekt umfasst das zweite Kommunikationsnetz ein Telefonie-Netz und/oder ein Mobilfunknetz.
Dies hat den Vorteil, dass die lokal erfassten Teilnehmerdaten auch im globalen oder regionalen Telefonie-Netz bzw. Mobilfunknetz zugänglich sind, d.h. der Nutzer kann die für ihn reservierten Dienste mit allen seinen Smartphones, die im lokalen Netz angemeldet sind, auch im globalen Netz nutzen.
Gemäß einer Ausführungsform umfasst das Verfahren gemäß dem ersten Aspekt ein Zuweisen eines Dienstes des zweiten Kommunikationsnetzes an alle von den Teilnehmerdaten umfassten mobilen Teilnehmerkommunikationsgeräte des ersten Kommunikationsnetzes in dem zweiten Kommunikationsnetz, insbesondere eines Dienstes aus der folgenden Liste: Vergünstigter Tarif zu bestimmten Mobilfunkzielen, Aktivierung eines Parallelrufs und/oder einer Anrufweiterleitung bei eingehendem Anruf, Übergabe von Anrufen im Mobilfunknetz, insbesondere Makeln oder explizite Anrufweiterleitung per Knopfdruck, Übermitteln von Zusatzinformationen, insbesondere einem aktuellen Standort, Zugriff und/oder Übertragung von Kontakten oder Adressbüchern zwischen den Kommunikationsentitäten, Zugriff auf Bilderalben der Kommunikationsentitäten, Automatisches Freigeben von Onlinespeichern der Kommunikationsentitäten, Suchen nach verlorenen Kommunikationsentitäten, Freischalten für mobiles Bezahlen, Notifikation über physische Präsenz von Buddies, Anlegen von Kontaktgruppen im Adressbuch, Zuweisen von Klingeltönen, insbesondere Klingeltöne für verschiedene virtuelle Räume und/oder Gruppen.
Dies bietet den Vorteil, dass eine Vielzahl von Diensten den Geräten des Nutzers bzw. der Nutzer einheitlich basierend auf ihrer Zugehörigkeit zu einem lokalen Netz auch im zweiten (globalen bzw. regionalen) Kommunikationsnetz, beispielsweise Telefonnetz, IP Netz, Mobilfunknetz zugewiesen werden können.

Gemäß einem zweiten Aspekt betrifft die Erfindung ein Kommunikationssystem gemäß den Merkmalen des unabhängigen Anspruchs 15.

Ein solches Kommunikationssystem hat den Vorteil, dass es das Zuweisen von Diensten an mobile Teilnehmergeräte flexibel und schnell ermöglicht, denn durch das Sammeln der Teilnehmerdaten von allen mobilen Geräten, die im ersten Kommunikationsnetz angemeldet sind, ist es möglich, schnell und flexibel eine Gruppe zusammenzufassen und ihre Daten zusammen als ein Teilnehmerdatensatz abzulegen. An alle Geräte, die dieser Gruppe angehören können nun schnell Dienste eines zweiten Kommunikationsnetzes zugewiesen werden, wenn der Teilnehmerdatensatz durch das Übertragen an das zweite Netz im zweiten Netz bekannt gemacht wird.
Ausführungsformen der Erfindung leisten das Folgende: Automatisierte Erstellung von Beziehungen zwischen mehreren Rufnummern (MSISDN) in einem Telefonie-Netzwerk abhängig von der physischen Annäherung der Geräte (ein Abzug der Realität zu einem gegebenen Moment), die mit einer MSISDN (oder einer anderen Identifikation, wie beispielsweise IMSI oder IMEI) ausgestattet sind und das Verwenden dieses Beziehungswissens über das Netzwerk zum Kreieren von virtuellen Räumen/Gruppen mit dem Beziehungswissen des Momentes z.B.: Home, Familie, Freunde, Arbeitskollegen. Diese können dann verschiedenen Dienstleistungen die beispielsweise in die fünf verschiedenen technischen Gruppierungen aufteilbar sind, anbieten, z.B.: Tarifbuchungen wie z.B. Family IP, MyFaves; Anlegen von Gruppen im Adressbuch; Sharing von zum Beispiel: Aufenthaltsort; Apps die diese Info verwenden können Zugang geben; Direkte App to App Dienste.

Gemäß einem Beispiel betrifft die Offenbarung ein System zur automatischen Erstellung von virtuellen Beziehungen bestehend aus einem oder mehreren Geräten, die mit einer eindeutige Identifizierung z. B. MSISDN ausgestattet sind, welche in einem (Telefonie-)Netzwerk verbunden sind und auf die ein Programm (z. B. App) installiert ist, dadurch gekennzeichnet dass die App die MSISDN des Gerätes ausliest und die folgende Schritte ausführt: meldet sich bei dem lokalen WiFi Server auf dem das Gerät verbunden ist, fragt nach allen Clients die in diesem WiFi verbunden sind und identifiziert alle im WiFi vorhandene Geräte, indem sie diese Geräte nach Ihren MSISDN Nummern fragt, die Geräte auf denen die gleiche App (oder einen App mit einem App Enabler) installiert ist, antworten mit der Übermittlung der eigenen MSISDN, dem Anwender wird durch die App angeboten die relevanten MSISDN Nummern auszuwählen die gespeichert werden sollen und optional einen oder mehrere virtuelle Räume zu benennen oder einen existierenden Raum auszuwählen wo diese ausgewählte MSISDNs gespeichert werden sollen, die App teilt einem (Autobuddy) Server der im (Telefonie-)Netzwerk verbunden ist, die neuen MSISDNs und die virtuelle Räume mit, wo diese gespeichert werden sollen.
Ein solches System hat den Vorteil, dass es das Zuweisen von Diensten an mobile Teilnehmergeräte flexibel und schnell ermöglicht.

In einer Ausführungsform des Systems gemäß dem Beispiel ist das (Telefonie-) Netzwerk so eingestellt, auf den Autobuddy Server zugreifen zu können und entsprechend der Informationen darauf Dienstleistungen wie zum Beispiel: den Tarif automatisch entsprechend anpassen oder anderen Geräten den Zugriff auf netzwerkbekannten Daten (z.B. Location) zu geben.

In einer Ausführungsform des Systems gemäß dem Beispiel kann die App (1) jederzeit auf den Autobuddy Server zugreifen und entsprechend der Informationen darauf die Gerät Dienstleistungen anpassen; wie zum Beispiel Klingel- Töne für verschiedene virtuelle Räume/Gruppen.

In einer Ausführungsform des Systems gemäß dem Beispiel können andere Apps oder Dienste den Zugriff auf den Autobuddy Server durch z.B. ein API bekommen, um dann entsprechend der Daten darauf Ihre Dienstleistungen anbieten zu können; z.B. Skype im Sinne von "ich bin immer erreichbar für meine Familie aber nicht für meine Bürokollegen."

In einer Ausführungsform des Systems gemäß dem Beispiel finden sich Apps des Systems gegenseitig und bieten ihrem Anwender automatisch an die MSSDN als Buddy aufzunehmen wenn sie im selben Wifi (d.h. am gleichen Ort) sind.

In einer Ausführungsform des Systems gemäß dem Beispiel können bei nicht vorhandener MSISDN auch andere Informationen z.B. MAC-Adressen oder IP Adressen ausgetauscht werden, sofern diese als Identifikator verwendet werden können.

In einer Ausführungsform des Systems gemäß dem Beispiel werden die MSISDN von dem (Autobuddy) Server, welcher mit dem (Telefonie-)Netzwerk verbunden ist mit den schon gespeicherte Nummern verglichen, um schon in den virtuellen Räumen/Gruppen gespeicherte Nummern als solche zu bezeichnen

In einer Ausführungsform des Systems gemäß dem Beispiel vergleicht die App die MSISDN mit dem lokalen Adressbuch auf dem Gerät und bietet dem User an, nicht existierende Nummern im Adressbuch zu speichern.
Weitere Ausführungsbeispiele werden Bezug nehmend auf die beiliegenden Zeichnungen erläutert. Es zeigen:
Fig. 1 eine schematische Darstellung eines ersten Kommunikationssystems 100 gemäß einer Ausführungsform mit einem ersten Smartphone 101 und einer Mehrzahl von weiteren Smartphones 103, 105, 107, die in einem ersten Kommunikationsnetz 110 angemeldet sind, wobei das erste Smartphone 101 Teilnehmerdaten an ein zweites Kommunikationsnetz 120 übermittelt;
Fig. 2 eine schematische Darstellung eines zweiten Kommunikationssystems 200 gemäß einer Ausführungsform mit einem ersten Smartphone 101 und einer Mehrzahl von weiteren Smartphones 103, 105, 107, die in einem ersten Kommunikationsnetz 110 angemeldet sind, wobei das erste Smartphone 101 Teilnehmerdaten an einen AutoBuddy Server übermittelt, auf die ein Dienst eines zweites Kommunikationsnetzes 120 zugreift;
Fig. 3 eine schematische Darstellung eines Verfahrens 300 zum Bereitstellen von Teilnehmerdaten einer Anzahl von mobilen Teilnehmerkommunikationsgeräten eines ersten Kommunikationsnetzes in einem zweiten Kommunikationsnetz gemäß einer Ausführungsform;
Fig. 4 ein Ablaufdiagramm eines Verfahrens 400 zum Bereitstellen von Teilnehmerdaten einer Anzahl von mobilen Teilnehmerkommunikationsgeräten eines ersten Kommunikationsnetzes in einem zweiten Kommunikationsnetz gemäß einer Ausführungsform; und
Fig. 5 eine schematische Darstellung eines Verfahrens 500 zum Bereitstellen von Teilnehmerdaten einer Anzahl von mobilen Teilnehmerkommunikationsgeräten eines ersten Kommunikationsnetzes in einem zweiten Kommunikationsnetz gemäß einer Ausführungsform.

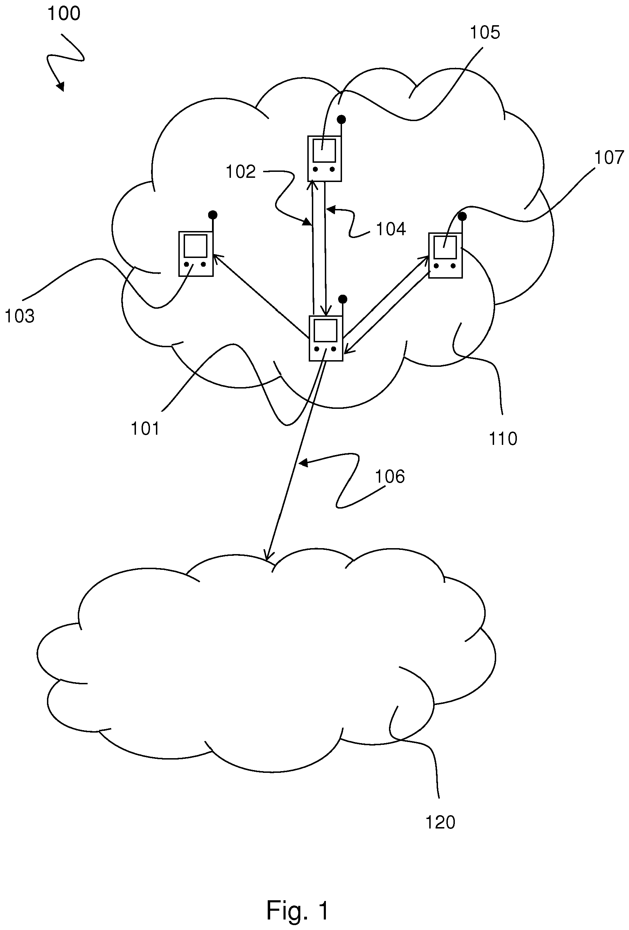

Fig. 1 zeigt eine schematische Darstellung eines ersten Kommunikationssystems 100 gemäß einer Ausführungsform mit einem ersten Smartphone 101 und einer Mehrzahl von weiteren Smartphones 103, 105, 107, die in einem ersten Kommunikationsnetz 110 angemeldet sind, wobei das erste Smartphone 101 Teilnehmerdaten an ein zweites Kommunikationsnetz 120 übermittelt.

Das Kommunikationssystem 100 umfasst eine Anzahl von mobilen Teilnehmerkommunikationsgeräten, hier die drei Smartphones 103, 105, 107, die in einem ersten Kommunikationsnetz 110 angemeldet sind. Das erste Kommunikationsnetz 110 kann beispielsweise ein WIFI Netz sein, ein WLAN Netz oder ein Heimnetzwerk, in dem die Smartphones angemeldet sind. Die mobilen Teilnehmerkommunikationsgeräte 103, 105, 107 können auch Mobiltelefone sein, Notebooks, Tablets oder andere mobile Geräte mit Kommunikationsadapter. Das Kommunikationssystem 100 umfasst ferner ein erstes Teilnehmerkommunikationsgerät, hier das Smartphone 101, das in dem ersten Kommunikationsnetz 110 angemeldet ist. Mit dem ersten Teilnehmerkommunikationsgerät 101 kann eine Datenanfrage 102 an die Anzahl der mobilen Teilnehmerkommunikationsgeräte 103, 105, 107 übertragen werden. Zumindest eines der mobilen Teilnehmerkommunikationsgeräte, hier das dritte 105 und das vierte 107 antworten auf die Datenanfrage des ersten Smartphones 101 mit einer Übertragung 104 ihrer Teilnehmerdaten an das erste Smartphone 101. Das zweite Smartphone 103 erhält zwar die Datenanfrage 102, doch es antwortet nicht darauf. Schließlich erhält das erste Smartphone 101 die Teilnehmerdaten des dritten und vierten Smartphones 105, 107 und überträgt 106 diese Teilnehmerdaten weiter an ein zweites Kommunikationsnetz 120, beispielsweise ein Telefonnetz oder ein Mobilfunknetz.
Nur diejenigen mobilen Teilnehmerkommunikationsgeräte 105, 107 übertragen ihre Teilnehmerdaten an das erste Smartphone 101 ansprechend auf die Datenanfrage 102, welche zur Übertragung von Teilnehmerdaten berechtigt sind. Dies sind hier das dritte und das vierte Smartphone 105, 107. Auf dem ersten mobilen Teilnehmerkommunikationsgerät 101 wird eine Applikationssoftware ausgeführt, welche das Übertragen der Datenabfrage 102 initiiert. Es sind diejenigen mobilen Teilnehmerkommunikationsgeräte 105, 107 zur Übertragung 104 von Teilnehmerdaten berechtigt, auf welchen die Applikationssoftware, z.B. ein auf dem Smartphone installiertes App, ausgeführt wird oder auf welchen eine Freigabesoftware zur Freigabe der Übertragung von Teilnehmerdaten ausgeführt wird, z.B. ein auf dem Smartphone installierter App-Enabler bzw. App-Freigeber. Das Übertragen der Datenanfrage 102 und/oder das Übertragen 104 der Teilnehmerdaten kann basierend auf einer physischen Annäherung des ersten mobilen Teilnehmerkommunikationsgeräts 101 zu der Anzahl der mobilen Teilnehmerkommunikationsgeräte 103, 105, 107 erfolgen. Dies bedeutet konkret, dass die Datenabfrage 102 nur in einem lokal begrenzten Netz übertragen wird, beispielsweise einem WLAN, einem WiFi Netz oder einem Heimnetz. In dem ersten Kommunikationsnetz kann ein Server die Steuerung des Netzes übernehmen. So kann sich das erste Smartphone 101 bei dem Server anmelden und von ihm die Adressen der in dem ersten Kommunikationsnetz registrierten mobilen Teilnehmerkommunikationsgeräte anfragen.
Auf die Anfrage antwortend kann der Server die Adressen der mobilen Teilnehmerkommunikationsgeräte 103, 105, 107, die in dem ersten Netz 110 angemeldet sind an das erste Teilnehmerkommunikationsgerät 101 übertragen. Der Server kann beispielsweise ein WIFI Server, ein WLAN Server oder ein Heimnetzserver sein. Das erste mobile Teilnehmerkommunikationsgerät 101 und die Anzahl der mobilen Teilnehmerkommunikationsgeräte 103, 105, 107 können Smartphones sein, die mit einer oder mehreren SIM Karte ausgestattet sind und/oder mit einer oder mehreren Multi SIM Karten.
Das Übertragen der Datenanfrage 102 kann eine Anfrage nach einer MSISDN Nummer der mobilen Teilnehmerkommunikationsgeräte 103, 105, 107 sein. Auf die Anfrage 102 hin können die dazu berechtigten Smartphones mit ihren MSISDN Nummern antworten und diese dem ersten Smartphone 101 übermitteln. Das erste Smartphone 101 kann dann eine Liste von MSISDN Nummern der Teilnehmerkommunikationsgeräte 105, 107, die auf seine Anfrage hin geantwortet haben, an das zweite Kommunikationsnetz 120 übertragen 106. Statt der Identifikation mit MSISDN Nummern können die mobilen Teilnehmerkommunikationsgeräte 101, 103, 105, 107 auch durch andere Identifikationen identifiziert werden, beispielsweise durch ihre IMEI (International Mobile Equipment Identity) Geräteidentifikation bzw. Hardwareidentifikation oder durch ihre IMSI (International Mobile Subscriber Identity), die eine eindeutige Identifizierung ermöglicht.

Die Teilnehmerdaten der Smartphones 105, 107, die geantwortet haben, können zusammen mit ihrer zugehörigen Identifikation, beispielsweise ihren MSISDN Nummern, auf dem Display des ersten Smartphones 101 angezeigt werden. Das erste Smartphone 101 kann vordem Übermitteln der Teilnehmerdaten an das zweite Kommunikationsnetz, eine anwenderbasierte Auswahl aus den Teilnehmerdaten treffen. Beispielsweise kann es die Teilnehmerdaten des dritten Smartphones 105 übermitteln, nicht jedoch die Teilnehmerdaten des vierten Smartphones 107.

Bei den Teilnehmerdaten kann es sich um Daten von Mobiltelefonen einer geschlossenen Gruppe handeln, beispielsweise der Familie oder von Freunden oder Arbeitskollegen, die in einem lokalen Kommunikationsnetz, d.h. hier dem ersten Kommunikationsnetz 110 angemeldet sind. Das erste Smartphone 101 kann somit die Telefonnummern aller zu dieser Gruppe gehörigen Teilnehmer auf einfach Art aufnehmen und zu einem Teilnehmerdatensatz zuordnen, der mit der Telefonnummer des ersten Smartphones 101 adressierbar abgelegt werden kann. Zusätzlich zu den Telefonnummern bzw. MSISDN Nummern der Gruppe können auch persönliche Daten, beispielsweise Fotos der zugehörigen Teilnehmer oder weitere Informationen, beispielsweise aus den Adressbüchern der jeweiligen Smartphones mit aufgenommen werden, um in dem zugehörigen Teilnehmerdatensatz gespeichert zu werden. Dieser Teilnehmerdatensatz, der dann die lokale Gruppe beschreibt, kann in anderen Netzen, beispielsweise Mobilfunknetzen, IP-Netzen oder Telefonnetzen von dem jeweiligen Netzbetreiber, beispielsweise dem MNO (Mobile Network Operator, Mobilfunknetzbetreiber) bei einem Mobilfunknetz, genutzt werden, um dieser Gruppe bestimmte Dienste zuzuweisen. Derartige Dienste sind beispielsweise vergünstigtes Telefonieren untereinander oder Anzeigen von weiteren im Adressbuch des anrufenden Teilnehmers hinterlegten Informationen beim gerufenen Teilnehmer oder auch geographische Informationen, wie beispielsweise der Ort, an dem sich der rufende/gerufene Teilnehmer gerade aufhält.

Die an das zweite Kommunikationsnetz 120 übermittelten Teilnehmerdaten können in einem Speicher gespeichert werden, beispielsweise in einem Speicher des ersten mobilen Teilnehmerkommunikationsgerät 101 oder in einem Speicher eines Servers des ersten Kommunikationsnetzes 110, beispielsweise einem WIFI Server, einem WLAN Server oder einem Heimnetzwerkserver, oder in einem Speicher eines Servers des zweiten Kommunikationsnetzes 120, beispielsweise einem Autobuddy Server. Die Teilnehmerdaten können basierend auf einer Identifikation des ersten mobilen Teilnehmerkommunikationsgeräts 101 gespeichert werden, beispielsweise einer MSISDN Nummer des ersten Smartphones 101. Diese Identifikation kann dazu verwendet werden, den gespeicherten Satz Teilnehmerdaten zu identifizieren, beispielsweise als Zeiger auf den so gespeicherten Datensatz. Zum Speichern der Teilnehmerdaten kann eine anwenderbasierte Auswahl einen virtuellen Raum und/oder eine virtuellen Gruppe angeben, in dem/der die Teilnehmerdaten gespeichert werden sollen. Ein virtueller Raum kann ein Speicherplatz auf einem Server sein, der durch die Identifikation oder MSISDN Nummer des ersten Smartphones 101 ansprechbar ist. Der Speicher kann in einem nicht vorher festgelegten Speicher auf einem Server des ersten Kommunikationsnetzes 110 oder des zweiten Kommunikationsnetzes 120 oder auf einem der mobilen Teilnehmerkommunikationsgeräte 101, 103, 105, 107 physikalisch allokiert sein. Der Speicher kann ohne den genauen Ort zu kennen, beispielsweise allein durch die Identifikation des Teilnehmerdatensatzes, also z.B. durch die MSISDN Nummer des ersten Smartphones 101 ansprechbar sein.

Das zweite Kommunikationsnetz kann ein Telefonie-Netz und/oder ein Mobilfunknetz sein. Bei dem zweite Kommunikationsnetz kann es sich ferner um ein Daten- oder Paketnetzwerk handeln, beispielsweise ein IP Netzwerk, über das Daten oder Datenpakete ausgetauscht werden können.

Basierend auf dem so angelegten Teilnehmerdatensatz kann in dem zweiten Kommunikationsnetz 120 ein Dienst an alle von den Teilnehmerdaten umfassten mobilen Teilnehmerkommunikationsgeräte des ersten Kommunikationsnetzes 110 zugewiesen werden. Es kann sich beispielsweise um einen oder mehrere der folgenden Dienste handeln: Vergünstigter Tarif zu bestimmten Mobilfunkzielen, Aktivierung eines Parallelrufs und/oder einer Anrufweiterleitung bei eingehendem Anruf, Übergabe von Anrufen im Mobilfunknetz, insbesondere Makeln oder explizite Anrufweiterleitung per Knopfdruck, Übermitteln von Zusatzinformationen, insbesondere einem aktuellen Standort, Zugriff und/oder Übertragung von Kontakten oder Adressbüchern zwischen den Kommunikationsentitäten, Zugriff auf Bilderalben der Kommunikationsentitäten, Automatisches Freigeben von Onlinespeichern der Kommunikationsentitäten, Suchen nach verlorenen Kommunikationsentitäten, Freischalten für mobiles Bezahlen, Notifikation über physische Präsenz von Buddies, Anlegen von Kontaktgruppen im Adressbuch, Zuweisen von Klingeltönen, insbesondere Klingeltöne für verschiedene virtuelle Räume und/oder Gruppen.

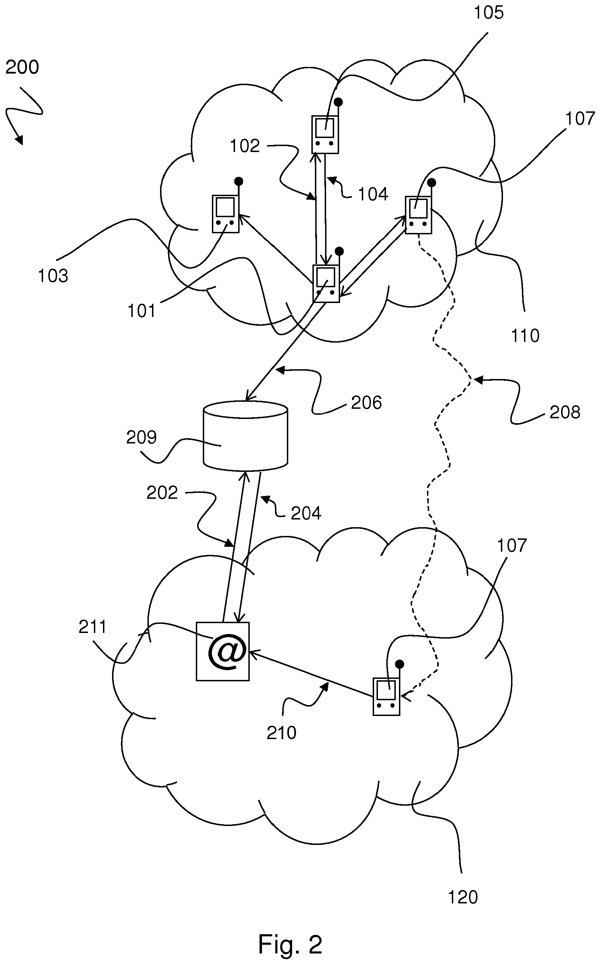

Fig. 2 zeigt eine schematische Darstellung eines zweiten Kommunikationssystems 200 gemäß einer Ausführungsform mit einem ersten Smartphone 101 und einer Mehrzahl von weiteren Smartphones 103, 105, 107, die in einem ersten Kommunikationsnetz 110 angemeldet sind, wobei das erste Smartphone 101 Teilnehmerdaten an einen AutoBuddy Server übermittelt, auf die ein Dienst eines zweites Kommunikationsnetzes 120 zugreift.

Das zweite Kommunikationssystem 200 entspricht dem in Fig. 1 dargestellten ersten Kommunikationssystem 100, wobei bei dem zweiten Kommunikationssystem 200 die Teilnehmerdaten in einem sogenannten Buddy-Server 209 gespeichert werden, auf den das zweite Kommunikationsnetz 120 zugreifen kann. Die bereits oben beschrieben Art der Beschaffung eines Teilnehmerdatensatzes ist die gleiche und gilt auch für das zweite Kommunikationssystem 200. Der Buddy-Server 209 ist in Fig. 2 zwischen dem zweiten Kommunikationsnetz 120 und dem ersten Kommunikationsnetz 110 dargestellt. Er kann sich aber in dem zweiten Kommunikationsnetz 120 befinden oder in dem ersten Kommunikationsnetz 110 oder in einem weiteren Kommunikationsnetz zwischen dem ersten 110 und dem zweiten Kommunikationsnetz 120. Das erste Kommunikationsnetz 110 kann sich auch innerhalb des zweiten Kommunikationsnetzes 120 befinden, beispielsweise kann das erste Kommunikationsnetz 110 ein Heimnetz, ein WLAN oder eine WiFi Netz sein, innerhalb dessen die mobilen Teilnehmerkommunikationsgeräte auch Zugriff auf das zweite Kommunikationsnetz 120 haben, beispielsweise wenn das zweite Kommunikationsnetz 120 ein Mobilfunknetz ist. In diesem Fall kann der Zugriff vorrangig auf das lokale erste Kommunikationsnetz 110 erfolgen, wenn sich die mobilen Teilnehmerkommunikationsgeräte in Reichweite des ersten Kommunikationsnetzes 110 befinden und nur dann auf das zweite Kommunikationsnetz 120, wenn die mobilen Teilnehmerkommunikationsgeräte sich außerhalb der Reichweite des ersten Kommunikationsnetzes 110 befinden.
In dem zweiten Kommunikationssystem 200 gemäß Fig. 2 befindet sich in dem zweiten Kommunikationsnetz 120 ein Dienste-Server 211, beispielsweise ein Web-Server, der auf den Buddy-Server 209 zugreifen kann, um Beziehungen, d.h. bestimmte dort gespeicherte Teilnehmerdatensätze anzufordern 202. Der Buddy-Server 209 kann auf diese Anfrage 202 mit dem angefragten Teilnehmerdatensatz antworten 204. Bewegt sich 208 eines der Smartphones des ersten Kommunikationsnetzes 110, in der Darstellung der Fig. 2 das vierte mobile Teilnehmerkommunikationsgerät 107, so dass es außerhalb der Reichweite des ersten Kommunikationsnetzes 110 gelangt und sich innerhalb des zweiten Kommunikationsnetzes 120 aufhält, so kann diese vierte mobile Teilnehmerkommunikationsgerät 107 eine Anfrage 210 beim Dienste-Server 211 stellen und Dienste der ihm zugehörigen Gruppe von Teilnehmerdaten anfordern. Damit werden dem vierten mobilen Teilnehmerkommunikationsgerät 107 aufgrund seiner Zugehörigkeit zu einer Gruppe, welche durch die Telefonnummer des ersten mobilen Teilnehmerkommunikationsgeräts 101 identifizierbar ist, gruppenspezifische Dienste zugewiesen. Der Dienste-Server 211 kann beispielsweise aufgrund der Telefonnummer des vierten mobilen Teilnehmerkommunikationsgeräts 107, die in der Anfrage 210 des vierten Smartphones 107 angegeben ist, beim Buddy-Server 209 nach der zugehörigen Gruppe anfragen und aufgrund des vom Buddy-Server 209 übermittelten Teilnehmerdatensatzes bzw. der Gruppe, der das vierte mobile Teilnehmerkommunikationsgerät 107 angehört, die für die Teilnehmer dieser Gruppe vorgegebenen Dienste dem vierten mobile Teilnehmerkommunikationsgerät 107 zuweisen.
Mit Hilfe des im (Telefonie-)und IP- Netzwerk existenten Servers 209 (hier als Autobuddy Server bezeichnet) können die Netzwerke und Dienste die vom User erschaffenen Beziehungen automatisch, selbstständig und agil verwalten aber gleichzeitig anderen App's/Programmen, API's anbieten. Das alles ist geräteunabhängig, da dieselbe MSISDN Nummer verschiedenen Geräten zugewiesen werden kann, wie es z.B. durch den Austausch der SIM Karte passieren kann.

Anwendungsfälle der in Fig. 2 beschriebenen Dienstzuweisung sind beispielsweise die Folgenden: Vergünstigter Tarif zu bestimmten Mobilfunkzielen, z.B. Telefonnummern können bei Tarifbuchung automatisch vom Billing übernommen werden; Aktivierung eines Parallelrufs/Anrufweiterleitungen auf Geräten bei einem eingehenden Anruf, z.B. alle Geräte können gleichzeitig klingeln; Übergabe von Anrufen im Mobilfunknetz, z.B. Makeln, Explizit Call Transfer per Button; Call Enrichment, z.B. beim Anruf eines der Geräte werden dem Anrufer Zusatzoptionen, wie z.B. der aktuelle Standort übermittelt; Zugriff bzw. Übertragung von Kontakten oder Adressbüchern zwischen den Endgeräten mit Hilfe des IP-Protokolls; Zugriff auf Bilderalben und automatische Freigaben für Onlinespeicher und ähnliches; Suchfunktion für verlorene Endgeräte; Freischalten für mobiles Payment über Remote Device; Notifikation über physische Präsenz der Buddies; Vereinfachte Anlage von Kontaktgruppen.

Eine weitere Anwendung des Kommunikationssystems 200 ist im Folgenden beschrieben: Ein Smartphone-Nutzer geht in ein Restaurant oder eine Bar mit freiem WiFi und meldet sich beim WiFi an. Es kann ein beliebiger Platz mit einem freien WiFi sein, beispielsweise ein Einkaufszentrum oder eine Universität oder eine Behörde. Der Smartphone-Nutzer kann auf dem Display seines Smartphones direkt erkennen wer von den anderen Teilnehmern des WiFi verfügbar ist, beispielsweise für Kontakte oder Treffen. Dies alles kann durch eine App initiiert werden, die auf dem Smartphone des Smartphone-Nutzers installiert ist. Der Smartphone-Nutzer kann sein eigenes Profil an alle anderen Nutzer des WiFis übermitteln (z.B. per Broadcast) und jeden Nutzer wissen lassen, dass er verfügbar ist für eine Verabredung. Der Smartphone-Nutzer kann die App an Freunde, Kollegen oder andere Smartphone-Nutzer verteilen, damit die App populär wird und auf vielen Smartphones eingesetzt wird.

Eine weitere Anwendung des Kommunikationssystems 200 ist im Folgenden beschrieben: Ein Smartphone-Nutzer kann eine App für eine Smartphone-Betriebssystem, beispielsweise Android nutzen, um IP Adressen aller Geräte, beispielsweise PCs und andere mobile Geräte anzuzeigen, die bei einem WiFi Router angemeldet sind, beispielsweise seinem lokalen Router. Die IP Adressen sind die Adressen, die beispielsweise durch ein DHCP Protokoll durch den Router den Geräten zugewiesen sind. Die App kann sich somit lokal verhalten gegenüber einem Gerät, das in einem bestimmten WiFi angemeldet ist. Die App kann die IP Adressen aller in dem lokalen WiFi angemeldeten Geräte beschaffen und damit ein Beziehungswissen aufbauen, das in anderen Netzen genutzt werden kann.

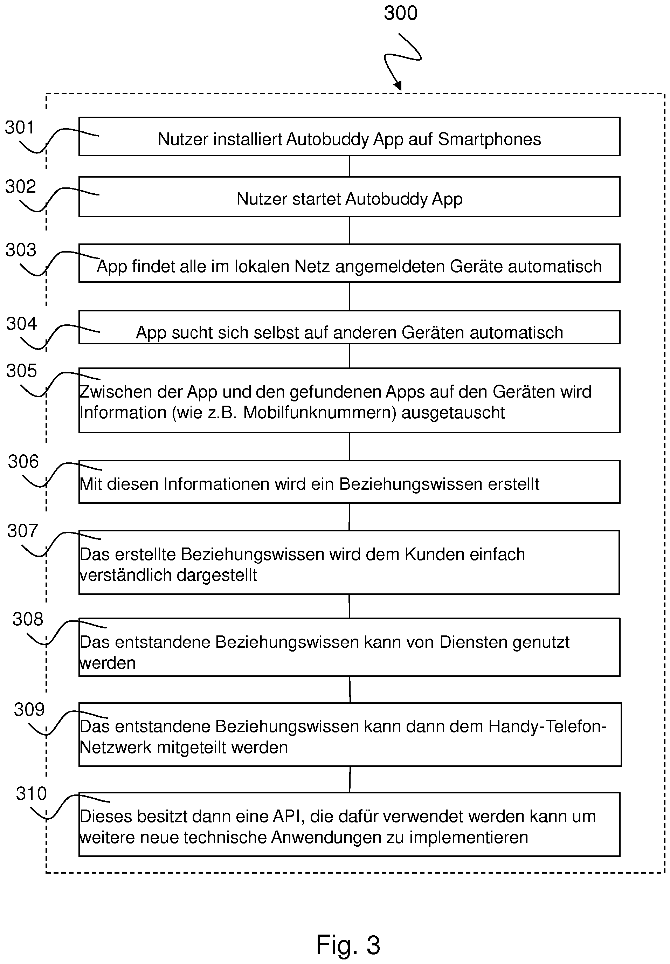

Fig. 3 zeigt eine schematische Darstellung eines Verfahrens 300 zum Bereitstellen von Teilnehmerdaten einer Anzahl von mobilen Teilnehmerkommunikationsgeräten eines ersten Kommunikationsnetzes in einem zweiten Kommunikationsnetz gemäß einer Ausführungsform.

Von der Ausgangssituation ausgehend, dass der Nutzer mit einem LAN entsprechend dem ersten Kommunikationsnetz 110 gemäß Fig. 1 und 2, z.B. seinem Heimnetzwerk, via WIFI verbunden ist, umfasst das Verfahren 300 die folgenden Schritte:
- Nutzer installiert Autobuddy App auf Smartphones, 301;
- Nutzer startet Autobuddy App, 302;
- App findet alle im lokalen Netz angemeldeten Geräte automatisch, 303;
- App sucht sich selbst auf anderen Geräten automatisch, 304;
- Zwischen der App und den gefundenen Apps auf den Geräten wird Information (wie z.B. Mobilfunknummern) ausgetauscht, 305;
- Mit diesen Informationen wird ein Beziehungswissen erstellt; 306
- Das erstellte Beziehungswissen wird dem Kunden einfach verständlich dargestellt, 307;
- Das entstandene Beziehungswissen kann von Diensten genutzt werden, 308;
- Das entstandene Beziehungswissen kann dann dem Handy-Telefon-Netzwerk mitgeteilt werden, 309; und
- Dieses (das Handy-Telefon-Netzwerk) besitzt dann eine API, die dafür verwendet werden kann um weitere neue technische Anwendungen zu implementieren, 310.

Die oben zu Fig. 1 und Fig. 2 beschriebene Datenanfrage des ersten mobilen Teilnehmerkommunikationsgeräts 101 kann die ersten fünf Schritten 301, 302, 303, 304, 305 des Verfahrens 300 umfassen. Das erste mobile Teilnehmerkommunikationsgerät 101 kann das Smartphone des ersten Schritts 301 sein, auf dem der Nutzer die Autobuddy App installiert, welche darauf vom Nutzer gestartet wird 302 und alle im lokalen Netz angemeldeten Geräte, d.h. die Mehrzahl der mobilen Teilnehmerkommunikationsgeräte 103, 105, 107 findet, sowie sich selbst auf den anderen Geräten 103, 105, 107 sucht und mit den gefundenen Apps auf den anderen Geräten, hier dem dritten und vierten mobilen Teilnehmerkommunikationsgerät 105, 107 Information austauscht, beispielsweise die Mobilfunknummern.

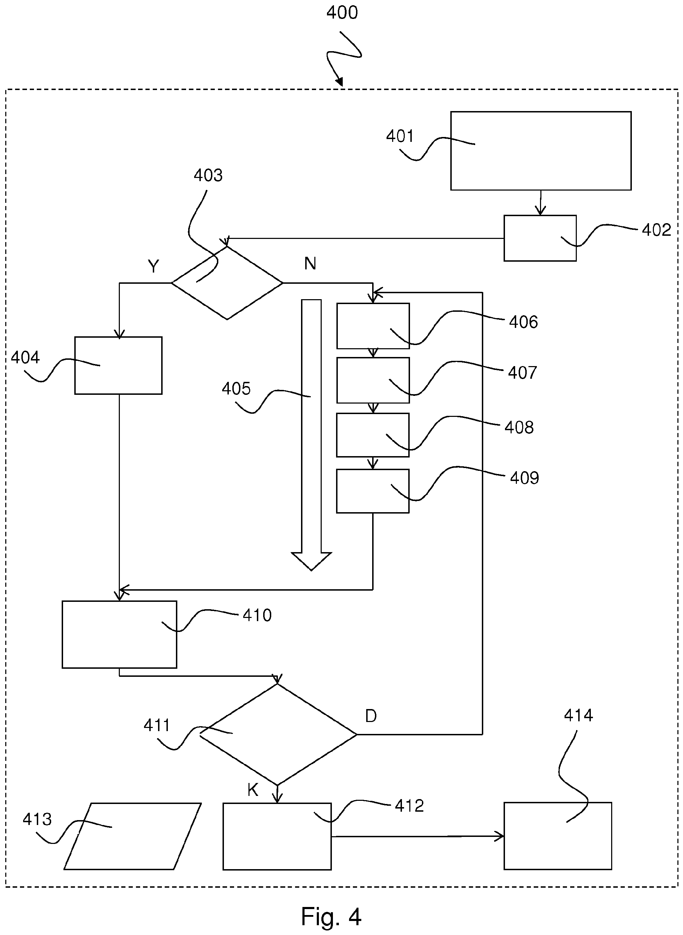

Das Antworten der oben zu Fig. 1 und 2 beschriebenen zumindest einen mobilen Teilnehmerkommunikationsgeräte 105, 107 kann ebenfalls den fünften Schritt 305 des Verfahrens umfassen sowie ferner die sechsten bis achten Schritte 306, 307, 308. Das Antworten auf die Datenanfrage des ersten Smartphones 101 mit einer Übertragung 104 der Teilnehmerdaten der zumindest einen mobilen Teilnehmerkommunikationsgeräte 105, 107 an das erste Smartphone 101 kann durch den Austausch der Informationen des fünften Schritts 305 beschrieben werden. Dieser Austausch der Informationen kann ferner ein Erstellen eines Beziehungswissens gemäß dem sechsten Schritt 306, eine einfache verständliche Darstellung des Beziehungswissens gemäß dem siebten Schritt 307 und ein Nutzen des Beziehungswissen durch Dienste gemäß dem achten Schritt 308 umfassen. Das oben zu Fig. 1 und 2 beschriebene Übertragen der Teilnehmerdaten an ein zweites Kommunikationsnetz 120 kann den sechsten bis zehnten Schritt 306, 307, 308, 309, 310 des Verfahrens 300 umfassen. Das Erstellen des Beziehungswissens gemäß dem sechsten Schritt 306 kann beispielsweise erst in dem zweiten Kommunikationsnetz 120 erfolgen, nachdem die Identifikation der Geräte, z.B. die MSISDN Nummern dorthin übertragen wurde. Das gleiche gilt für die einfache verständliche Darstellung des Beziehungswissens gemäß dem siebten Schritt 307 und das Nutzen des Beziehungswissens durch Dienste gemäß dem achten Schritt 308. Das Mitteilen des Beziehungswissens an das Handy-Telefon Netzwerk 309 kann dabei von dem oben zu Fig. 1 und 2 beschriebenen Übertragen der Teilnehmerdaten an ein zweites Kommunikationsnetz 120, hier das Handy-Telefon-Netzwerk umfasst sein, ebenso das Verwenden eines API im Handy-Telefon-Netzwerk, um neue technische Anwendungen zu implementieren 310. Ein Ablaufdiagramm zu diesem Verfahren 300 ist in Fig. 4 illustriert und wird im Folgenden näher beschrieben.

Fig. 4 zeigt ein Ablaufdiagramm eines Verfahrens 400 zum Bereitstellen von Teilnehmerdaten einer Anzahl von mobilen Teilnehmerkommunikationsgeräten eines ersten Kommunikationsnetzes in einem zweiten Kommunikationsnetz gemäß einer Ausführungsform. Das Verfahren 400 beschreibt eine Autobuddy Implementierung zur automatischen Erzeugung relevanter Beziehungen für ein mobiles Szenario und bildet damit eine Ausgestaltung des in Fig. 1 im Allgemeinen beschriebenen Verfahrens.

Im ersten Schritt 401 ist als Vorbedingung für den Ablauf des Verfahrens 400 die Folgende genannt: Die App (Softwareapplikation) mit einem Enabler bzw. einer Freischalte-App ist auf einem Smartphone installiert. Das Smartphone ist in einem lokalen WiFi Netz angemeldet bzw. registriert. Der Service, d.h. Dienst bzw. der "Usecase", d.h. das Anwendungsszenario wird getriggert bzw. angestoßen und braucht dazu relevante Beziehungsdaten entsprechend den in Fig. 1 und 2 beschriebenen Teilnehmerdaten.

Beispiele für mögliche Dienste bzw. Anwendungsszenarien sind im Folgenden beschrieben: Verwendung einer Telefon Flatrate für die engsten Familienmitglieder; Definieren von Ausnahmen für die Erreichbarkeit, z.B. ist das Telefon stumm geschaltet, klingelt aber trotzdem, wenn die Ehefrau anruft; Anzeigen von zusätzlichen Informationen während des Anrufens beim engsten Freund, Kumpel, Kamerad (hier auch als Buddy bezeichnet), beispielsweise seine geographische Position; Teilen von Inhalten, z.B. Bildern, automatisch in der Peergroup, d.h. der Gruppe von Kollegen, Kameraden, Buddies, Familie, Freunden oder anderen; automatisches Erzeugen der Adressgruppe "Deine Familie", d.h. der Peergroup der Familie.

Im zweiten Schritt 402, der auf den ersten Schritt 401 folgt, wird die MSISDN Nummer eines Geräts von der App detektiert. Im dritten Schritt 403, der auf den zweiten Schritt 402 folgt, fragt die App den Server, d.h. den Server des lokalen WiFi Netzes, ob die detektierte MSISDN bereits existiert. Antwortet der Server mit Ja (Y), dann erhält die App im vierten Schritt 404 die existierenden Beziehungsdaten bzw. Teilnehmerdaten in Form einer Liste mit zugehörigen MSISDN Nummern von dem Server. Antwortet der Server mit Nein (N), dann erfolgt der automatische Abtastprozess 405 mit dem sechsten 406, siebenten 407, achten 408 und neunten 409 Schritt. Im sechsten Schritt 406 fragt die App den lokalen WiFi Router bzw. den Server des WiFi Netzes nach seinen Clients, d.h. Kunden. Im siebenten Schritt 407 nach dem sechsten Schritt 406 erhält die App die lokalen Adressinformationen von dem lokalen WiFi Router. Im achten Schritt 408, d.h. nach dem siebenten Schritt 407, fragt die App die anderen Geräte im lokalen Netzwerk, d.h. die Geräte von denen sie vom WiFi Server die Adressinformationen erhalten hat, nach ihren MSISDN Nummern. Im neunten Schritt 409 nach dem achten Schritt 408 liefern die Geräte, auf denen die gleiche App installiert ist, die angeforderten MSISDN Nummern. Schließlich kommen die Zweige nach dem vierten Schritt 404 und dem neunten Schritt 409 im zehnten Schritt 410 wieder zusammen, wo die App die Nummern anzeigt und sie um Namen bereichert, soweit diese sich im lokalen Adressbuch befinden.

Im elften Schritt 411, der auf den zehnten Schritt 410 folgt, wird der Kunde danach gefragt, welche Nummern er behalten will bzw. ob er die automatische Detektion neu starten möchte. Möchte der Kunde die automatische Detektion neu starten (D), so werden erneut die Schritte des automatischen Abtastprozesses 405 ausgeführt. Möchte der Kunde die Nummern behalten (K), dann wird im zwölften Schritt 412 die Information über die ausgewählten MSISDN Nummern, d.h. die Teilnehmerdaten entsprechend der Beschreibung zu den Figuren 1 und 2, dem Server mitgeteilt, beispielsweise in Form einer Liste von MSISDN Nummern. Den Hauptidentifizierer dieser Informationen bzw. Teilnehmerdaten bildet die MSISDN Nummer des Nutzers, der diesen Prozess angestoßen hat. Im dreizehnten Schritt 413 werden die relevanten MSISDN Nummern auf dem Server gespeichert. Damit sind neue Teilnehmerdaten auf dem Server gespeichert. Nach dem zwölften Schritt 412 erhält der Nutzer im vierzehnten Schritt ein Feedback über die erfolgreiche Ausführung des Verfahrens 400.

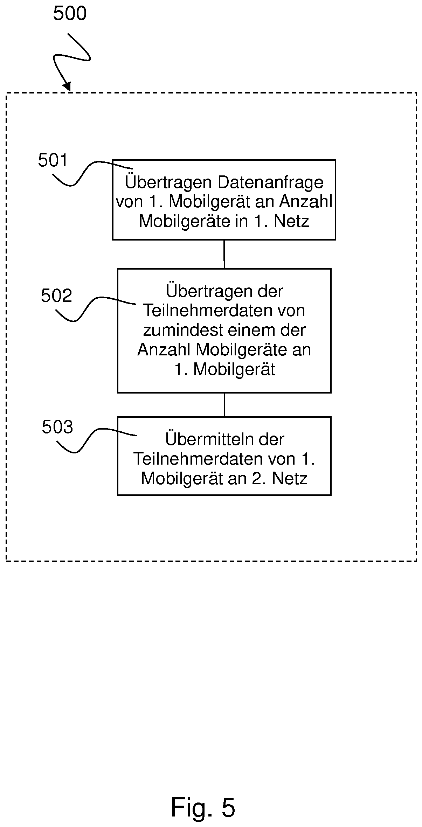

Fig. 5 zeigt eine schematische Darstellung eines Verfahrens 500 zum Bereitstellen von Teilnehmerdaten einer Anzahl von mobilen Teilnehmerkommunikationsgeräten eines ersten Kommunikationsnetzes in einem zweiten Kommunikationsnetz gemäß einer Ausführungsform. Das Verfahren 500 umfasst die folgenden Schritten: Übertragen 501 einer Datenanfrage von einem ersten mobilen Teilnehmerkommunikationsgerät, z.B. dem ersten Smartphone 101 aus Fig. 1 und 2, welches in dem ersten Kommunikationsnetz 110 angemeldet ist, an die Anzahl von mobilen Teilnehmerkommunikationsgeräten 103, 105, 107, die in dem ersten Kommunikationsnetz 110 angemeldet sind, z.B. die zweiten, dritten und vierten Smartphones 103, 105, 107 aus Fig. 1 und 2; Übertragen 502 von Teilnehmerdaten von zumindest einem mobilen Teilnehmerkommunikationsgerät 105, 107, z.B. den dritten und vierten Smartphones 105, 107 aus Fig. 1 und 2, aus der Anzahl der mobilen Teilnehmerkommunikationsgeräte 103, 105, 107, an das erste mobile Teilnehmerkommunikationsgerät 101; und Übermitteln 503 der Teilnehmerdaten von dem ersten mobilen Teilnehmerkommunikationsgerät 101 an das zweite Kommunikationsnetz 120, z.B. dem in Fig. 1 und 2 dargestellten zweiten Kommunikationsnetz 120.

Bei dem Verfahren 500 können beispielsweise nur diejenigen mobilen Teilnehmerkommunikationsgeräte 105, 107 Teilnehmerdaten ansprechend auf die Datenanfrage 102 übertragen, welche zur Übertragung von Teilnehmerdaten berechtigt sind. Auf dem ersten mobilen Teilnehmerkommunikationsgerät 101 kann beispielsweise eine Applikationssoftware ausgeführt werden, welche das Übertragen der Datenabfrage 102 initiiert; und diejenigen mobilen Teilnehmerkommunikationsgeräte 105, 107 können zur Übertragung 104 von Teilnehmerdaten berechtigt sein, auf welchen die Applikationssoftware ausgeführt wird oder auf welchen eine Freigabesoftware zur Freigabe der Übertragung 104 von Teilnehmerdaten ausgeführt wird. Das Übertragen der Datenanfrage 102 und/oder das Übertragen 104 der Teilnehmerdaten kann beispielsweise basierend auf einer physischen Annäherung des ersten mobilen Teilnehmerkommunikationsgeräts 101 zu der Anzahl der mobilen Teilnehmerkommunikationsgeräte 103, 105, 107 erfolgen.
Das Verfahren kann beispielsweise ein Übermitteln von Adressen der Anzahl der mobilen Teilnehmerkommunikationsgeräte 103, 105, 107 von einem Server des ersten Kommunikationsnetzes 110 an das erste Teilnehmerkommunikationsgerät 101 enthalten, wobei der Server ein WIFI Server, ein WLAN Server oder ein Heimnetzserver sein kann. Die mobilen Teilnehmerkommunikationsgeräte 101, 103, 105, 107 können beispielsweise mit zumindest einer SIM Karte und/oder zumindest einer Multi SIM Karte ausgestattet sein. Das Übertragen der Datenanfrage 102 kann eine Anfrage nach zumindest einer MSISDN Nummer der Anzahl der mobilen Teilnehmerkommunikationsgeräte 103, 105, 107 enthalten. Das Übermitteln der Teilnehmerdaten kann eine Übermittlung einer Liste von MSISDN Nummern der zumindest einen Teilnehmerkommunikationsgeräte 105, 107 enthalten. Das Verfahren 500 kann ferner ein Anzeigen der Teilnehmerdaten zusammen mit einer zugehörigen Identifikation, insbesondere einer MSISDN Nummer, der zumindest einen mobilen Teilnehmerkommunikationsgeräte 105, 107 enthalten. Das Verfahren 500 kann ein Speichern der Teilnehmerdaten umfassen, beispielsweise in einem Speicher zumindest einer der folgenden Entitäten: dem ersten mobilen Teilnehmerkommunikationsgerät 101, einem Server des ersten Kommunikationsnetzes 110, insbesondere einem WIFI Server, einem WLAN Server oder einem Heimnetzwerkserver, einem Server, insbesondere einem Autobuddy Server 209, des zweiten Kommunikationsnetzes 120. Das Verfahren 500 kann ein Speichern der Teilnehmerdaten basierend auf einer Identifikation des ersten mobilen Teilnehmerkommunikationsgeräts 101 umfassen, insbesondere einer MSISDN Nummer. Das Verfahren 500 kann ein Speichern der Teilnehmerdaten basierend auf einer anwenderbasierten Auswahl zumindest eines virtuellen Raumes und/oder zumindest einer virtuellen Gruppe umfassen. Das zweite Kommunikationsnetz 120 kann ein Telefonie-Netz und/oder ein Mobilfunknetz umfassen.

Das Verfahren 500 kann ferner ein Zuweisen eines Dienstes des zweiten Kommunikationsnetzes 120 an alle von den Teilnehmerdaten umfassten mobilen Teilnehmerkommunikationsgeräte 105, 107 des ersten Kommunikationsnetzes 110 in dem zweiten Kommunikationsnetz 120 enthalten, insbesondere eines Dienstes aus der folgenden Liste: Vergünstigter Tarif zu bestimmten Mobilfunkzielen, Aktivierung eines Parallelrufs und/oder einer Anrufweiterleitung bei eingehendem Anruf, Übergabe von Anrufen im Mobilfunknetz, insbesondere Makeln oder explizite Anrufweiterleitung per Knopfdruck, Übermitteln von Zusatzinformationen, insbesondere einem aktuellen Standort, Zugriff und/oder Übertragung von Kontakten oder Adressbüchern zwischen den Kommunikationsentitäten, Zugriff auf Bilderalben der Kommunikationsentitäten, Automatisches Freigeben von Onlinespeichern der Kommunikationsentitäten, Suchen nach verlorenen Kommunikationsentitäten, Freischalten für mobiles Bezahlen, Notifikation über physische Präsenz von Buddies, Anlegen von Kontaktgruppen im Adressbuch, Zuweisen von Klingeltönen, insbesondere Klingeltöne für verschiedene virtuelle Räume und/oder Gruppen.

Ein weiteres Beispiel umfasst auch ein Computerprogrammprodukt, das direkt in den internen Speicher eines digitalen Computers geladen werden kann und Softwarecodeabschnitte umfasst, mit denen die in den Figuren 3 bis 5 beschriebenen Verfahren 300, 400, 500 ausgeführt werden können, wenn das Produkt auf einem Computer läuft. Das Computerprogrammprodukt kann auf einem computergeeigneten Medium gespeichert sein und folgendes umfassen: computerlesbare Programmittel, die einen Computer veranlassen, eine Datenanfrage von einem ersten mobilen Teilnehmerkommunikationsgerät, welches in dem ersten Kommunikationsnetz angemeldet ist, an die Anzahl von mobilen Teilnehmerkommunikationsgeräten, die in dem ersten Kommunikationsnetz angemeldet sind, zu übertragen; Teilnehmerdaten von zumindest einem mobilen Teilnehmerkommunikationsgerät aus der Anzahl der mobilen Teilnehmerkommunikationsgeräte an das erste mobile Teilnehmerkommunikationsgerät zu übertragen; und die Teilnehmerdaten von dem ersten mobilen Teilnehmerkommunikationsgerät an das zweite Kommunikationsnetz zu übermitteln.

Je nachdem, auf welchem Computer das Computerprogrammprodukt läuft, beispielsweise erstem mobilen Teilnehmerkommunikationsgerät oder einem aus der Anzahl der mobilen Teilnehmerkommunikationsgeräte, können die Programmmittel die entsprechenden Schritte, die für den Ablauf des Verfahrens geeignet sind, ausführen. Beispielsweise kann das Computerprogrammprodukt das erste mobile Teilnehmerkommunikationsgerät dazu veranlassen, eine Datenanfrage an die Anzahl der mobilen Teilnehmerkommunikationsgeräten, die in dem ersten Kommunikationsnetz angemeldet sind, zu übertragen. Beispielsweise kann das Computerprogrammprodukt die Anzahl der mobilen Teilnehmerkommunikationsgeräte dazu veranlassen, Teilnehmerdaten von zumindest einem mobilen Teilnehmerkommunikationsgerät aus der Anzahl der mobilen Teilnehmerkommunikationsgeräte an das erste mobile Teilnehmerkommunikationsgerät zu übertragen. Beispielsweise kann das Computerprogrammprodukt das erste mobile Teilnehmerkommunikationsgerät dazu veranlassen, die Teilnehmerdaten an das zweite Kommunikationsnetz zu übermitteln. Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise umfassend eine Anzahl von Smart-Karten, Chipkarten, SIM Karten oder Multi SIM-Karten angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können.

### Bezugszeichenliste

- 100:: Erstes Kommunikationssystem
- 101:: erstes mobiles Teilnehmerkommunikationsgerät
- 103:: zweites mobiles Teilnehmerkommunikationsgerät
- 105:: drittes mobiles Teilnehmerkommunikationsgerät
- 107:: viertes mobiles Teilnehmerkommunikationsgerät
- 110:: erstes Kommunikationsnetz
- 120:: zweites Kommunikationsnetz
- 102:: Übertragen einer Datenanfrage von erstem mobilen Teilnehmerkommunikationsgerät an Anzahl von mobilen Teilnehmerkommunikationsgeräten, die im ersten Kommunikationsnetz 110 angemeldet sind
- 104:: Übertragen von Teilnehmerdaten von zumindest einem mobilen Teilnehmerkommunikationsgerät 105, 107 aus der Anzahl der mobilen Teilnehmerkommunikationsgeräte 103, 105, 107 an das erste mobile Teilnehmerkommunikationsgerät 101
- 106:: Übermitteln der Teilnehmerdaten von dem ersten mobilen Teilnehmerkommunikationsgerät 101 an das zweite Kommunikationsnetz 120
- 200:: Zweites Kommunikationssystem
- 209:: (Auto) Buddy Server
- 211:: Dienste-Server
- 202:: Anforderung von Beziehungen bzw. Teilnehmerdatensätzen des Dienste-Servers 211 an den Buddy Server 209
- 204:: Antwort des Buddy-Servers 209 auf die Anforderung 202 mit dem angefragten Teilnehmerdatensatz
- 208:: Bewegung eines Smartphones 107 aus dem ersten Kommunikationsnetz 110 ins zweite Kommunikationsnetz 120
- 210:: Anfrage des Teilnehmerkommunikationsgeräts 107 an den Dienste-Server 211
- 300:: Verfahren zum Bereitstellen von Teilnehmerdaten
- 301-310:: Schritte des Verfahrens 300
- 400:: Verfahren zum Bereitstellen von Teilnehmerdaten
- 401-414:: Schritte des Verfahrens 400
- 500:: Verfahren zum Bereitstellen von Teilnehmerdaten
- 501-503:: Schritte des Verfahrens 500

## Patentansprüche

1. Verfahren (500) zum Bereitstellen von Teilnehmerdaten einer Anzahl von mobilen Teilnehmerkommunikationsgeräten (103, 105, 107) eines ersten Kommunikationsnetzes (110) in einem zweiten Kommunikationsnetz (120), mit folgenden Schritten:
Übertragen (501, 102) einer Datenanfrage von einem ersten mobilen Teilnehmerkommunikationsgerät (101), welches in dem ersten Kommunikationsnetz (110) angemeldet ist, an die Anzahl von mobilen Teilnehmerkommunikationsgeräten (103, 105, 107), die in dem ersten Kommunikationsnetz (110) angemeldet sind;
Übertragen (502, 104) von Teilnehmerdaten von zumindest einem mobilen Teilnehmerkommunikationsgerät (105, 107) aus der Anzahl der mobilen Teilnehmerkommunikationsgeräte (103, 105, 107) an das erste mobile Teilnehmerkommunikationsgerät (101); und
Übermitteln (503, 106) der Teilnehmerdaten von dem ersten mobilen Teilnehmerkommunikationsgerät (101) an das zweite Kommunikationsnetz (120),
**gekennzeichnet durch**:
Zuweisen von Diensten des zweiten Kommunikationsnetzes (120) an eines (107) der mobilen Teilnehmerkommunikationsgeräte (103, 105, 107) entsprechend seiner Gruppenzugehörigkeit zu den Teilnehmerdaten, nachdem sich das eine (107) der mobilen Teilnehmerkommunikationsgeräte (103, 105, 107) von einem Bereich des ersten Kommunikationsnetzes (110) in einen Bereich des zweiten Kommunikationsnetzes (120) bewegt hat.

2. Verfahren (500) nach Anspruch 1,
wobei nur diejenigen mobilen Teilnehmerkommunikationsgeräte (105, 107) Teilnehmerdaten ansprechend auf die Datenanfrage (102) übertragen, welche zur Übertragung von Teilnehmerdaten berechtigt sind.

3. Verfahren (500) nach Anspruch 2,
wobei auf dem ersten mobilen Teilnehmerkommunikationsgerät (101) eine Applikationssoftware ausgeführt wird, welche das Übertragen der Datenabfrage (102) initiiert; und
wobei diejenigen mobilen Teilnehmerkommunikationsgeräte (105, 107) zur Übertragung (104) von Teilnehmerdaten berechtigt sind, auf welchen die Applikationssoftware ausgeführt wird oder auf welchen eine Freigabesoftware zur Freigabe der Übertragung (104) von Teilnehmerdaten ausgeführt wird.

4. Verfahren (500) nach einem der vorstehenden Ansprüche,
wobei das Übertragen der Datenanfrage (102) und/oder das Übertragen (104) der Teilnehmerdaten basierend auf einer physischen Annäherung des ersten mobilen Teilnehmerkommunikationsgeräts (101) zu der Anzahl der mobilen Teilnehmerkommunikationsgeräte (103, 105, 107) erfolgen.

5. Verfahren (500) nach einem der vorstehenden Ansprüche, ferner umfassend:
Übermitteln von Adressen der Anzahl der mobilen Teilnehmerkommunikationsgeräte (103, 105, 107) von einem Server des ersten Kommunikationsnetzes (110) an das erste Teilnehmerkommunikationsgerät (101), wobei der Server einen WIFI Server, einen WLAN Server oder einen Heimnetzserver umfasst.

6. Verfahren (500) nach einem der vorstehenden Ansprüche, wobei die mobilen Teilnehmerkommunikationsgeräte (101, 103, 105, 107) mit zumindest einer SIM Karte und/oder zumindest einer Multi SIM Karte ausgestattet sind.

7. Verfahren (500) nach einem der vorstehenden Ansprüche,
wobei das Übertragen der Datenanfrage (102) eine Anfrage nach zumindest einer MSISDN Nummer der Anzahl der mobilen Teilnehmerkommunikationsgeräte (103, 105, 107) umfasst.

8. Verfahren (500) nach einem der vorstehenden Ansprüche,
wobei das Übermitteln der Teilnehmerdaten eine Übermittlung einer Liste von MSISDN Nummern der zumindest einen Teilnehmerkommunikationsgeräte (105, 107) umfasst.

9. Verfahren (500) nach einem der vorstehenden Ansprüche, ferner umfassend:
Anzeigen der Teilnehmerdaten zusammen mit einer zugehörigen Identifikation, insbesondere einer MSISDN Nummer, der zumindest einen mobilen Teilnehmerkommunikationsgeräte (105, 107).

10. Verfahren (500) nach einem der vorherigen Ansprüche, umfassend:
Speichern der Teilnehmerdaten in einem Speicher zumindest einer der folgenden Entitäten:
dem ersten mobilen Teilnehmerkommunikationsgerät (101),
einem Server des ersten Kommunikationsnetzes (110), insbesondere einem WIFI Server, einem WLAN Server oder einem Heimnetzwerkserver,
einem Server, insbesondere einem Autobuddy Server (209), des zweiten Kommunikationsnetzes (120).

11. Verfahren (500) nach Anspruch 10, umfassend:
Speichern der Teilnehmerdaten basierend auf einer Identifikation des ersten mobilen Teilnehmerkommunikationsgeräts (101), insbesondere einer MSISDN Nummer.

12. Verfahren (500) nach Anspruch 10 oder 11, umfassend:
Speichern der Teilnehmerdaten basierend auf einer anwenderbasierten Auswahl zumindest eines virtuellen Raumes und/oder zumindest einer virtuellen Gruppe.

13. Verfahren (500) nach einem der vorherigen Ansprüche,
wobei das zweite Kommunikationsnetz (120) ein Telefonie-Netz und/oder ein Mobilfunknetz umfasst.

14. Verfahren (500) nach einem der vorherigen Ansprüche, umfassend:
Zuweisen eines Dienstes des zweiten Kommunikationsnetzes (120) an alle von den Teilnehmerdaten umfassten mobilen Teilnehmerkommunikationsgeräte (105, 107) des ersten Kommunikationsnetzes (110) in dem zweiten Kommunikationsnetz (120), insbesondere eines Dienstes aus der folgenden Liste:
Vergünstigter Tarif zu bestimmten Mobilfunkzielen,
Aktivierung eines Parallelrufs und/oder einer Anrufweiterleitung bei eingehendem Anruf,
Übergabe von Anrufen im Mobilfunknetz, insbesondere Makeln oder explizite Anrufweiterleitung per Knopfdruck,
Übermitteln von Zusatzinformationen, insbesondere einem aktuellen Standort,
Zugriff und/oder Übertragung von Kontakten oder Adressbüchern zwischen den Kommunikationsentitäten,
Zugriff auf Bilderalben der Kommunikationsentitäten,
Automatisches Freigeben von Onlinespeichern der Kommunikationsentitäten,
Suchen nach verlorenen Kommunikationsentitäten,
Freischalten für mobiles Bezahlen,
Notifikation über physische Präsenz von Buddies,
Anlegen von Kontaktgruppen im Adressbuch,
Zuweisen von Klingeltönen, insbesondere Klingeltöne für verschiedene virtuelle Räume und/oder Gruppen.

15. Kommunikationssystem (200), mit:
einer Anzahl von mobilen Teilnehmerkommunikationsgeräten (103, 105, 107), die in einem ersten Kommunikationsnetz (110) angemeldet sind; und
einem ersten Teilnehmerkommunikationsgerät (101), das in dem ersten Kommunikationsnetz (110) angemeldet ist,
wobei das erste Teilnehmerkommunikationsgerät (101) ausgelegt ist, eine Datenanfrage (102) an die Anzahl der mobilen Teilnehmerkommunikationsgeräte (103, 105, 107) zu übertragen;
wobei zumindest eines der mobilen Teilnehmerkommunikationsgeräte (105, 107) aus der Anzahl der mobilen Teilnehmerkommunikationsgeräte (103, 105, 107) ausgelegt ist, Teilnehmerdaten an das erste mobile Teilnehmerkommunikationsgerät (101) zu übertragen (104); und
wobei das erste Teilnehmerkommunikationsgerät (101) ausgelegt ist, die Teilnehmerdaten an ein zweites Kommunikationsnetz (120) zu übertragen (206), **dadurch gekennzeichnet, dass**
das Kommunikationssystem (200) einen Dienste-Server (211) umfasst, der ausgelegt ist, Dienste des zweiten Kommunikationsnetzes (120) an eines (107) der mobilen Teilnehmerkommunikationsgeräte (103, 105, 107) entsprechend seiner Gruppenzugehörigkeit zu den Teilnehmerdaten zuzuweisen, nachdem sich das eine (107) der mobilen Teilnehmerkommunikationsgeräte (103, 105, 107) von einem Bereich des ersten Kommunikationsnetzes (110) in einen Bereich des zweiten Kommunikationsnetzes (120) bewegt hat.

## Claims

1. Method (500) for providing subscriber data of a plurality of mobile subscriber communication devices (103, 105, 107) of a first communication network (110) in a second communication network (120), comprising following steps:
transmitting (501, 102) a data request of a first mobile subscriber communication device (101), which is registered in the first communications network (110), to the plurality of mobile subscriber communication devices (103, 105, 107), which are registered in the first communication network (110);
transmitting (502, 104) subscriber data of at least one mobile subscriber communication device (105, 107) from the plurality of the mobile subscriber communication devices (103, 105, 107) to the first mobile subscriber communication device (101); and
transmitting (503, 106) the subscriber data from the first mobile subscriber communication device (101) to the second communication network (120),
**characterized by**
allocating services of the second communication network (120) to one (107) of the mobile subscriber communication devices (103, 105, 107) according to its group membership of the subscriber data, after the one (107) of the mobile subscriber communication devices (103, 105, 107) has moved from a region of the first communication network (110) into a region of the second communication network (120).

2. Method (500) according to claim 1,
wherein only those mobile subscriber communication devices (105, 107) which are authorized to transmit subscriber data transmit subscriber data in response to the data request (102).

3. Method (500) according to claim 2,
wherein an application software which initiates the transmission of the data request (102) is performed on the first mobile subscriber communication device (101); and
wherein those mobile subscriber communication devices (105, 107) are authorized to transmit (104) subscriber data, on which the application software is performed or on which an approval software for approving the transmission (104) of subscriber data is performed.

4. Method (500) according to any one of the preceding claims, wherein the transmission of the data request (102) and/or the transmission (104) of the subscriber data take place based on a physical approximation of the first mobile subscriber communication device (101) to the plurality of the mobile subscriber communication devices (103, 105, 107).

5. Method (500) according to any one of the preceding claims, further comprising:
transmitting addresses of the plurality of the mobile subscriber communication devices (103, 105, 107) from a server of the first communication network (110) to the first subscriber communication device (101), wherein the server comprises a WIFI server, a WLAN server or a home network server.

6. Method (500) according to any one of the preceding claims, wherein the mobile subscriber communication devices (101, 103, 105, 107) are equipped with at least one SIM card and/or at least one multi-SIM card.

7. Method (500) according to any one of the preceding claims,
wherein the transmission of the data request (102) comprises a request for at least one MSISDN number of the plurality of the mobile subscriber communication devices (103, 105, 107).

8. Method (500) according to any one of the preceding claims,
wherein the transmission of the subscriber data comprises a transmission of a list of MSISDN numbers of the at least one subscriber communication devices (105, 107).

9. Method (500) according to any one of the preceding claims, further comprising:
displaying the subscriber data together with an associated identification, in particular an MSISDN number, the at least one mobile subscriber communication devices (105, 107).

10. Method (500) according to any one of the preceding claims, comprising:
storing the subscriber data in a memory of at least one of the following entities:
the first mobile subscriber communication device (101),
a server of the first communication network (110), in particular a WIFI server, a WLAN server or a home network server,
a server, in particular an Autobuddy server (209), of the second communication network (120).

11. Method (500) according to claim 10, comprising:
storing the subscriber data based on an identification of the first mobile subscriber communication device (101), in particular an MSISDN number.

12. Method (500) according to claim 10 or 11, comprising:
storing the subscriber data based on a user-based selection of at least one virtual space and/or at least one virtual group.

13. Method (500) according to any one of the preceding claims,
wherein the second communication network (120) comprises a telephony network and/or a mobile radio network.

14. Method (500) according to any one of the preceding claims, comprising:
allocating a service of the second communication network (120) to all mobile subscriber communication devices (105, 107), comprised by the subscriber data, of the first communication network (110) in the second communication network (120), in particular a service from the following list:
reduced rate to certain mobile radio destinations,
activation of a parallel call and/or a call forwarding during an incoming call,
handover of calls in the mobile radio network, in particular brokering or explicit call forwarding by pressing a button,
transmission of additional information, in particular a current location,
access and/or transfer of contacts or address books between the communication entities,
access to images albums of communication entities,
automatic release of online storage of the communication entities,
searching for lost communication entities,
unlocking for mobile payments,
notification of physical presence of buddies,
creating contact groups in the address book,
allocating ring tones, in particular ringtones for different virtual spaces and/or groups.

15. Communication system (200), comprising:
a plurality of mobile subscriber communication devices (103, 105, 107), which are registered in a first communication network (110); and
a first subscriber communication device (101), which is registered in the first communication network (110),
wherein the first subscriber communication device (101) is configured to transmit a data request (102) to the plurality of the mobile subscriber communication devices (103, 105, 107);
wherein at least one of the mobile subscriber communication devices (105, 107) from the plurality of the mobile subscriber communication devices (103, 105, 107) is configured to transmit (104) subscriber data to the first mobile subscriber communication device (101); and
wherein the first subscriber communication device (101) is configured to transmit (206) the subscriber data to a second communication network (120),
**characterized in that**
the communication system (200) comprises a service server (211), which is configured to allocate services of the second communication network (120) to one (107) of the mobile subscriber communication devices (103, 105, 107) according to its group membership of the subscriber data, after the one (107) of the mobile subscriber communication devices (103, 105, 107) has moved from a region of the first communication network (110) into a region of the second communication network (120).

## Revendications

1. Procédé (500) pour fournir des données d'abonné d'une pluralité de dispositifs de communication d'abonné mobiles (103, 105, 107) d'un premier réseau de communication (110) dans un deuxième réseau de communication (120), comportant les étapes suivantes:
transmettre (501, 102) une requête de données d'un premier dispositif de communication d'abonné mobile (101), lequel est connecté au premier réseau de communication (110), à la pluralité des dispositifs de communication d'abonné mobiles (103, 105, 107), qui sont connectés au premier réseau de communication (110);
transmettre (502, 104) des données d'abonné d'au moins un dispositif de communication d'abonné mobile (105, 107) de la pluralité des dispositifs de communication d'abonné mobiles (103, 105, 107) au premier dispositif de communication d'abonné mobile (101); et
transmettre (503, 106) les données d'abonné du premier dispositif de communication d'abonné mobile (101) au deuxième réseau de communication (120),
**caractérisé par** les étapes suivantes:
assigner des services du deuxième réseau de communication (120) correspondant à son appartenance de groupe aux données d'abonné à l'un (107) des dispositifs de communication d'abonné mobiles (103, 105, 107), après que ledit (107) dispositif de communication d'abonné mobile (103, 105, 107) s'est déplacé d'une région du premier réseau de communication (110) à une région du deuxième réseau de communication (120).

2. Procédé (500) selon la revendication 1,
dans lequel seulement ceux dispositifs de communication d'abonné mobiles (105, 107) lesquels ont le droit de transmettre des données d'abonné, transmettent des données d'abonné en réponse à la requête de données (102).

3. Procédé (500) selon la revendication 2,
dans lequel un logiciel d'application est exécuté sur le premier dispositif de communication d'abonné mobile (101) qui commence la transmission de la requête de données (102); et
dans lequel les dispositifs de communication d'abonné mobiles (105, 107) qui ont le droit de transmettre les données d'abonné sont ceux sur lesquels le logiciel d'application est exécuté ou sur lesquels un logiciel d'autorisation est installé pour autoriser la transmission de données d'abonné.

4. Procédé (500) selon l'une des revendications précédentes,
dans lequel la transmission de la requête de données (102) et/ou la transmission (104) des données d'abonné sont effectuées sur la base d'une approche physique du premier dispositif de communication d'abonné mobile (101) à la pluralité des dispositifs de communication d'abonné mobiles (103, 105, 107).

5. Procédé (500) selon l'une des revendications précédentes, comportant en outre les étapes suivantes:
transmettre les adresses de la pluralité des dispositifs de communication d'abonné mobiles (103, 105, 107) d'un premier server du premier réseau de communication (110) au premier dispositif de communication d'abonné (101), dans lequel le server comporte un server WIFI, un server WLAN ou un server maison.

6. Procédé (500) selon l'une des revendications précédentes, dans lequel les dispositifs de communication d'abonné mobiles (101, 103, 105, 107) sont équipés avec au moins une carte SIM et/ou au moins une carte multi SIM.

7. Procédé (500) selon l'une des revendications précédentes,
dans lequel l'étape de transmettre la requête de données (102) comporte au moins une requête sur un nombre MSISDN de la pluralité des dispositifs de communication d'abonné mobiles (103, 105, 107).

8. Procédé (500) selon l'une des revendications précédentes,
dans lequel la transmission des données d'abonné comporte une transmission d'une liste de nombres de MSISDN de l'au moins un dispositif de communication d'abonné mobile (105, 107).

9. Procédé (500) selon l'une des revendications précédentes, comportant en outre l'étape d':
afficher les données d'abonné avec une identification correspondante, en particulier un nombre MSISDN, de l'au moins un dispositif de communication d'abonné mobile (105, 107).

10. Procédé (500) selon l'une des revendications précédentes, comportant l'étape de:
stocker les données d'abonné dans une mémoire de l'au moins l'une des entités suivantes:
d'un premier dispositif de communication d'abonné mobile (101),
d'un serveur d'un premier réseau de communication (110), en particulier un serveur WIFI, un serveur WLAN ou un serveur maison,
d'un serveur, en particulier un serveur autobuddy (209), du deuxième réseau de communication (120).

11. Procédé (500) selon la revendication 10, comportant l'étape de:
stocker les données d'abonné sur la base d'une identification du premier dispositif de communication d'abonné mobile (101), en particulier d'un nombre MSISDN.

12. Procédé (500) selon la revendication 10 ou 11, comportant l'étape de:
stocker les données d'abonné sur la base d'un choix basé sur une utilisation d'au moins un espace virtuel et/ou d'au moins un groupe virtuel.

13. Procédé (500) selon l'une des revendications précédentes, dans lequel le deuxième réseau de communication (120) comporte un réseau de téléphonie et/ou un réseau radio mobile.

14. Procédé (500) selon l'une des revendications précédentes, comportant l'étape d':
assigner un service du deuxième réseau de communication (120) à tous les dispositifs de communication d'abonné mobiles (105, 107) compris dans les données d'abonné du premier réseau de communication (110) dans le deuxième réseau de communication (120), en particulier un service de la liste suivante:
un tarif réduit sur des cibles de radiotéléphonie mobile spécifiques,
activation d'un appel parallèle et/ou d'une redirection d'un appel entrant,
transfert d'appels dans le réseau radio mobile, en particulier des tares ou d'une redirection explicite d'appels en appuyant sur un bouton,
transmettre des informations supplémentaires, en particulier une position actuelle,
accès et/ou transmission de contacts ou de carnets d'adresses entre les entités de communication,
accès à des albums de photo des entités de communication,
autorisation automatique de stockage en ligne des entités de communication,
chercher des entités de communication perdues,
activation pour paiement mobile,
notification sur la présence physique des buddies,
mettre des groupes de contact dans le livre d'adresses,
assigner des sonneries, en particulier des sonneries pour des espaces virtuels différents et/ou des groupes.

15. Système de communication (200), comportant:
une pluralité de dispositifs de communication d'abonné mobiles (103, 105, 107), qui sont connectés dans un premier réseau de communication; et
un premier dispositif de communication d'abonné (101), qui est connecté dans le premier réseau de communication (110),
dans lequel le premier dispositif de communication d'abonné (101) est conçu pour transmettre une requête de données (102) à la pluralité des dispositifs de communication d'abonné mobiles (103, 105, 107),
dans lequel au moins l'un des dispositifs de communication d'abonné mobiles (105, 107) de la pluralité des dispositifs de communication d'abonné mobiles (103, 105, 107) est conçu pour transmettre (104) des données d'abonné au premier dispositif de communication d'abonné mobile (101); et
dans lequel le premier dispositif de communication d'abonné (101) est conçu pour transmettre (206) les données d'abonné à un deuxième réseau de communication (120),
**caractérisé en ce que**:
le système de communication (200) comporte un serveur de service (211) conçu pour assigner des services du deuxième réseau de communication (120) à l'un (107) des dispositifs de communication d'abonné mobiles (103, 105, 107) correspondant à son appartenance aux données d'abonné,
après que ledit (107)
dispositif de communication d'abonné mobile (103, 105, 107) s'est déplacé d'une région du premier réseau de communication (110) à une région du deuxième réseau de communication (120).
